# EUROPEAN PATENT APPLICATION

(11) **EP 4 261 137 A1**
(43) Date of publication of application: **18.10.2023**
(21) Application number: 22020177.6
(22) Date of filing: 15.04.2022
(51) Int. Cl.: B64D 37/30

(54) **HYDROGEN OPTIMIZED AIRCRAFT ARCHITECTURE AND OPERATIONS**

(71) Applicant: Deutsche Aircraft GmbH, 82234 Wessling (DE)
(72) Inventor: NÜßELER, Martin, 86869 Oberostendorf (DE)

(57) **Abstract**

The invention relates to a transport aircraft with a dual fuel propulsion system. The aircraft 20 is capable of performing a flight mission comprising sections of at least takeoff, climb, cruise, decent, approach and landing during which the first or the second fuel is selectively useable. The aircraft 20 comprises

• • at least one internal combustion engine 31, 32 capable of generating propulsive thrust using selectively a first kerosene based jet fuel and a second liquid hydrogen fuel,
• • two independent sets of fuel systems 50, 55, including a first fuel system 55 feeding the first fuel from a first set of fuel storage tanks 41 to the internal combustion engine 31, 32 and a second fuel system 50 feeding the second fuel from a second set of fuel storage tanks 51 to the internal combustion engine,
• • at least two separate sets of fuel storage tanks 41, 51 with a first set of fuel storage tanks 41 storing the first fuel and a second set of fuel storage tanks 51 storing the second fuel, wherein both sets of fuel storage tanks 41, 51 host the required fuel for the flight mission plus reserve fuel,
• • a fuselage 22 with a forward cabin section 23 to host passengers and / or freight and a cabin section in the tail section of the fuselage 22 hosting the second set of fuel storage tanks 51,
• • wings (26) attached to the fuselage 22 to generate lift and to host an internal set of fuel storage tanks 4,

Advantages: Based on a turboprop aircraft 20 with about 40 to 90 passengers, about 40% of the energy during a 1-hour mission can be represented emission-free via hydrogen. This means no C0₂ emissions during the cruise flight and also no climate-damaging exhaust gas and condensation trail effects at cruising altitude (FL 250), which represent a significant proportion of aviation emissions.

Fig. 1a

## Description

The invention relates to a transport aircraft with a dual fuel propulsion system. The aircraft according to the invention features as well a fuel system and fuel tank system to enable hydrogen operation with optimised payload efficiency.

The aircraft propulsion system architecture which is using dual fuel engine technology in combination with the required fuel system and fuel tanks system to reduce significantly emissions by payload efficiency and open the opportunity balance mission range with zero CO2 and low emission operation.

The term aircraft refers in particular to a motor-driven fixed-wing aircraft. However, the term aircraft also includes, for example, rotorcraft (rotor aircraft, helicopters) and powered gliders. Aircraft and their flight propulsion systems can be differentiated with regard to the applicable construction and certification regulations. Regulation CS-23 issued by EASA is applicable to light fixed-wing powered aeroplanes. It applies to: 'normal, utility or aerobatic' category aeroplanes with a maximum of 9 seats (excluding pilot(s)) and a maximum take-off mass of 5,670 kg and to 'commuter' category aeroplanes with a maximum of 19 seats (excluding pilot(s)) and a maximum take-off mass of 8,618 kg. The CS-25 is also a design specification issued by EASA for the type certification of large aircraft, in particular large turbine-powered aircraft. Multi-engine aircraft to be certified according to the CS-25 are considered here.

Regional transport aircraft are predominantly characterised by a design with straight, unswept wings and a cruising speed of 500 to 700 km/h. Today, turboprop propulsion is the main application for regional transport aircraft in civil aviation. A prominent representative of this aircraft category is the Dornier 328-100. (Dornier 328 TP. 2020. Verfügbar: https://328.eu/wp-content/uploads/2020/09/D328-100.pdf [Aufgerufen 28.09.2020]).

A turboprop engine is a turbine engine that drives an aircraft propeller. A turboprop consists of an intake, reduction gearbox, compressor, combustor, turbine, and a propelling nozzle. The air enters the intake and is compressed by the compressor. Kerosene fuel is then added to the compressed air in the combustor, where the fuel-air mixture then combusts. The hot combustion gases expand through a set of turbine stages, generating power at the point of exhaust. Some of the power generated by the turbine is used to drive the compressor and electric generator. The gases are then exhausted from the turbine. In contrast to a turbojet or turbofan, the engine's exhaust gases do not provide enough energy to create significant thrust, since almost all of the engine's power is used to drive the propeller via the gear-box.

This type of engine is characterised by relatively low specific fuel consumption, which is why it is primarily used in transport and short-haul aircraft. Another civilian application is in smaller business jets such as the TBM-850. In the military, turboprops are mainly used in tactical transport aircraft. Aircraft with turboprops are limited to flying speeds of up to 80 per cent of the speed of sound (0.8 Mach), which corresponds to about 870 km/h at an altitude of 8,000 m in normal conditions. In this speed range, turboprops operate more economically than jet turbine engines.

To generate thrust, a large amount of air is moved by the propeller, but this is only slightly accelerated compared to turbojet engines. In pure turbojet engines, on the other hand, much smaller quantities of the propulsion medium are accelerated much more strongly.

Depending on airspeed, altitude and load, the angle of attack (pitch) of the propeller blades is changed so that both the turbine and the propeller operate as consistently as possible in the optimum speed range.

The turbomachinery is usually optimised for the dominant flight phase, usually the cruise phase, as this also accounts for the highest share of energy consumption over the mission. Equivalent, high operating efficiency is not possible over all flight phases. While for medium and long haul the maximum efficiency can be designed and achieved for the clearly dominant cruise phase, the operating conditions for short and ultra-short haul are much less dominant and more diverse. As a result, engines for regional and short-haul aircraft are operated much less at optimal efficiency over the entire mission and have poorer specific fuel consumption per passenger relative to short- and long-haul aircraft. Among other things, the different drop in propulsive and thermal efficiency plays a role here, since a propeller aircraft, for example, flies lower and experiences lower, altitude-dependent thrust losses in cruise flight than, comparatively, a long-haul aircraft with a turbofan engine. This results in long-range engines running much more consistently at high power and good efficiency than in climb, while regional aircraft have very significantly wider power ranges, e.g. at take-off, climb and cruise.

Therefore, especially for regional aircraft with propeller, but also for other twin-engine aircraft with paddlewheel or rotor, there are very different thrust requirements over the mission, which can be designed and operated more efficiently by hybridising the thermal engines with an electric engine.

Added to this is the challenge of reducing CO2, NOX and noise emissions. In fact decarbonization is a major challenge for aviation. The aviation sector emits more than 900 million tons of carbon dioxide (CO2) per year. Assuming industry growth of 3 to 4 percent per annum (p.a.) and efficiency improvement of 2 percent p.a., emissions would more than double by 2050. In the same time period, the Air Transport Action Group (ATAG) committed to 50 percent CO2 emission reduction (compared to 2005) and the European Union (EU) set with the Green Deal a target to become carbon neutral. Beyond CO2, aircraft impact the climate through emissions of nitrogen oxides (NOx), soot, and water vapour, which create contrails and cirrus clouds. Therefore, the "full" contribution to global warming is significantly higher than just CO2 emissions alone. (Hydrogen-powered aviation, A fact-based study of hydrogen technology, economics, and climate impact by 2050, Publication date 22. June 2020. Available https://www.clean-hydrogen.europa.eu/media/publications/hydrogen-powered-aviation_en [down loaded: 04.03.2022]).

The question that currently arises is whether electric or hydrogen-powered aircraft will be used in the future to meet the aforementioned requirements? Possibly. Airbus, Rolls Royce, GE and Siemens believe that they can solve the problem of reducing CO2, NOX and noise emissions by replacing a turbofan engine with an electric engine, following the automotive industry on the path of electrically, or at least hybrid, powered vehicles. ("Flightpath 2050 Europe's Vision for Aviation," [Online]. Available: https://op.europa.eu/s/vUu1 [down loaded 04.03.2022]).

GE International is working on a corresponding hybridised turbofan engine for twin-engine commercial aircraft, as the disclosure of EP 3 421 760 A1 shows. An electric motor is coupled to the high-pressure shaft of one turbofan engine and to the low-pressure shaft of the other turbofan engine. An electrical energy storage is provided to feed the electric motors, so that the electric motors can provide additional drive power to the coupled turbofan in certain operating states. A similar solution is proposed by SNECMA in publication WO 2009/153471 A2.

In order to reduce the impact on the climate, the industry is exploring other concepts, such as a radical new technology that uses sustainable aviation fuels (SAF) on a significant scale as a synthetic fuel (synfuel) temporarily as an offset in large quantities or on a combination thereof. Hydrogen power is one such technology.

In the 1980s, alternative fuels for jet engines were tested in practice at Tupolev as part of the further development of the Tu-154. This resulted in the prototype Tu-155, which was powered by liquid hydrogen or natural gas. In this three-engine aircraft, the right engine was not powered by paraffin but by hydrogen or natural gas. In any case, the lessons learned teach that the switch to hydrogen for large commercial aircraft requires a new design with large, heavy LH₂ tanks. In addition, the higher weight of long-haul aircraft increases energy consumption and thus costs considerably.

Since this short window of opportunity necessitates rapid development of H₂ propulsion components, demonstrations should have the scale of a regional or short-range aircraft so that relevant safety features can be tested as soon as possible. A well-known aircraft platform (e.g., Bae 146, ATR 72, Airbus A320) could be used to first.

The industry will move from partly Sustainable Aviation Fuel to 100% SAF and in the second step to more energy efficient produced H₂. However H₂ transportation and storage is a challenge.

100% SAF - early opportunity due to less impact on aircraft but production cost of fuel through carbon capture is costly and very energy intensive Hydrogen - fuel could be used in different architectures with different impacts on aircraft design, cost and energy efficiency per payload.

The major impact of using hydrogen fuel for aircrafts is the increased energy storage volume and fuel tank system weight. This leads to a significant design impact in both variants, H₂ combustions and H₂-fuel cells for propulsion electrification. This is why full hydrogen energy application over mission is not compatible with today's aircraft configurations.

The dual fuels propulsion architecture as it is known for example from aircraft engine manufacturer General Electric (WO 2012/045028 A1 and US 2013/0192246A1) is based on the combination of classical aircraft fuel, e.g., available Jet A-1 compatible fossil and synthetic fuels or full sustainable aviation fuels (SAF) in combination with hydrogen.

The key challenge is that zero CO₂ emission flight is currently not payload and volume efficient possible with hydrogen due to the impact on hydrogen storage system on volume and weight over a certain flight mission. This is valid by using hydrogen for combustion and even more by using hydrogen as energy source for fuel cells and propulsion electrification.

It is therefore the objective of the invention to provide to an optimised solution of a dual fuels propulsion architecture for a commercial transport airplane which on one hand is capable to reduce climate impacting emissions and on the other hand to maintain the aircraft's energy and power efficiency over payload.

The solution to the objective is provided by the features of the independent claims 1.

An essential component of this invention is an aircraft architecture that enables a 'zero emission' cruise flight and thus also eliminates the aviation-specific non-CO₂ emissions in high air layers. In the claims, the invention describes a solution for allocating the fuel types to the respective flight phases and thus for integrating the dimensioning of the zero emission propulsion system in weight and volume with existing technology in an existing aircraft platform. The invention further discloses a solution for an overall aircraft system comprising the essential elements of a hybrid propulsion system, a hydrogen tank system and a control and regulation unit.

The invention provides the concept to design and operate an aircraft powered by a conventional turboprop engine with a hybrid dual fuel concept using a first kerosene based jet fuel and a liquid hydrogen fuel. The two different fuel types are used selectively for individual sections of a typical flight mission. The aircraft provides separated sets of fuel storage tanks one first set of fuel tanks for the kerosene fuel and one second set of fuel tanks for the liquid hydrogen fuel. Both sets of fuel storage tanks are seized and configured that the fuel required for the reserve fuel which is typically 45 min flight time, is provided by the kerosene fuel tanks.

Final reserve fuel is the minimum fuel required to fly for 45 minutes at 1,500 feet above the alternate aerodrome or, if an alternate is not required, at the destination aerodrome at holding speed in ISA conditions.

An essential aspect of the invention is the design of such a system on the basis of an intended mission and the overall architecture of the aircraft. Dimensioning and representation of the required efficiency is not possible without consideration of the overall aircraft system.

Since the reserve fuel is hardly used during a usual flight mission profile, it is allocated to the kerosene fuel tanks which are the usual fuel tanks in the wing of a turbo-prop aircraft like a D328-100. For a given 300nm mission this quantity already presents a significant volume of more than 50% of the total required fuel quantity of a mission. In consequence the majority, if not the full remaining mission can be flown by using hydrogen fuel alone. In this way the required fuel storage for the mission can be limited to the actual flight time which is reducing the weight and volume of the cryogenic fuel tank significantly. In consequence bulky modifications of the aircraft architecture can be avoided so the important aerodynamic drag/lift characteristic of a given aircraft design stays largely untouched.

The dual-fuel propulsion system for aircraft according to the invention is based on a specific propulsion system architecture using two different energy sources or fuels, which enables emission-free operation of an aircraft during essential phases of a typical mission (zero emission cruise, climb etc.). Due to the specific system architecture and the combination of two energy sources, the impact of the new technology and energy sources on today's aircraft configurations already in service is minimised and enables a significantly earlier deployment possibility compared to the current emission-free system proposals.

The proposed aircraft architecture is using a dual fuel engine technology in combination with the required dual fuel system and fuel tanks system to reduce significantly the weight and required space impact of hydrogen tanks and fuel systems for an aircraft. This invention is enabling hydrogen operation with reduced impact on payload and / or passengers vs conventional aircraft with the same block fuel [BF] equivalent block energy [BE] for defined missions.

The invention is applicable and usable in general for all segments of aircraft, airplanes and rotorcraft, for which hydrogen fuel is targeted objective for operation. This can be driven by fuel cost, existing infrastructure and to eliminate CO₂ emissions. In all these cases the regulatory requirements concerning reserve fuel can significantly limiting the efficiency or missions can be operated.

Different fuels will have different climate emission impacts at different flight levels. The invention gives the possibility of choosing the best (lowest impact) fuel for each flight level. The aircraft operator can vary and choose the fuel according to the lowest emission impact of the aircraft depending on route and flight level. It will be assisted by a software supported system in the aircraft cockpit. The result will be an emission optimised aircraft operation.

As a result, the dual fuel possibility and the flexibility of different Hydrogen tank positions will enabling hydrogen operation with reduced impact on payload and / or passengers vs conventional aircraft with the same block fuel [BF] equivalent block energy [BE] for defined missions.

Therefore, the aircraft operator can vary and choose the fuel according to the lowest emission impact of the aircraft depending on route and flight level. It will be assisted by a software supported system in the aircraft cockpit. The result will be an emission optimised aircraft operation.

Essentially, the dual-fuel combustion propulsion system architecture is supporting the following targets for future aircraft and its operation:
1. Aircraft energy and power efficiency over payload [kWh / kg payload]; [kW / kg payload]
2. Max reduction of climate impacting emissions [CO₂, NOₓ, contrails]
3. Reliable system architecture to secure highest safety requirements [system reliability by achievable components reliability]
4. Limitation of impact on current validated aircraft concepts to enable early application [downsizing]

The dual-fuel combustion propulsion system is using jet-A1, jet-A1 compatible sustainable aviation fuel or 100% sustainable aviation fuel (SAF) for low altitude mission phases and for required fuel margin and hydrogen for cruise. This strategy of dual fuel burns over mission enables:
- Minimising the impact of hydrogen fuel storage
- Maintaining the key climate impacting emissions during main flight phase
- Maintaining the aircraft airframe design by using the wing for the kerosene re
- serve fuel

Compared to high-capacity, battery-based hybrid concepts currently under development, there is a significant weight-optimised design, as current battery concepts still only have a low specific energy density.

In order to achieve the goal of an emission-free cruise flight with this system and at the same time an early possibility of application, the dimensioning of the system and the use of the two energy sources over the mission is essential if compatibility with current aircraft concepts is to be ensured. There are at least two essential factors here:
- The amount of hydrogen and the resulting tank volume should have no effect on the aerodynamic surface dimensions (no additional drag and thus loss of performance).
- The sizing of the fuel tank systems is primarily adapted to climb, cruise flight, descent and landing therefore the limited use of kerosene fuel predominantly for reserve is an optimisation of the use without having to oversize the LH₂ fuel tanks and to take advantage of given fuel reservoirs hosted internally in the wings.

Further concepts to reduce emissions are offered by direct air capture (DAC) technologies to produce kerosene based fuels. Direct air capture technologies extract CO₂ directly from the atmosphere. The CO₂ can be permanently stored in deep geological formations (thereby achieving negative emissions or carbon removal) or it can be used, for example in food processing or combined with hydrogen to produce synthetic fuels, e.g. SAF.

In general, hydrogen fuel can be stored as a pressurised gas or in liquid form. While gaseous storage may be suitable for shorter flights and is commercially available, the invention focuses on liquid hydrogen storage tanks (LH₂) as they require about half the volume and are consequently much lighter than tanks for gaseous hydrogen. Since LH₂ must remain cold and heat transfer must be minimised to avoid evaporation of the hydrogen, spherical or cylindrical tanks are suggested to keep losses low.

With regard to liquid hydrogen storage tanks, tanks with a gravimetric index of 20 per cent or higher should be aimed for. The gravimetric index of a tank is calculated by dividing the mass of the stored hydrogen by the sum of the mass of the stored hydrogen and the empty tank weight. A gravimetric index of 50 percent means that the empty tank is as heavy as the stored hydrogen.

The turboprop engine can be optimized for delivering propulsive power, where the LH₂ is supplied to the combustor injectors at the appropriate temperature via a heat exchanger in the engine pylon.

In summary, the propulsion system enables the use of new technologies for aviation but on the basis of today's assessable outlook within the next decade:
1. Applicability in today's aircraft concepts (wing - fuselage, with significant, but today assessable changes). Essential for this is, for example, the continued use of the wing as a fuel tank for the internal combustion engines,
2. Fundamentally transferable and thus applicable certification rules at aircraft level. Verification of new technologies and energies, but conformity with basic requirements.
3. Use of the aircraft even without hydrogen system with the given system design, e.g. in regions without hydrogen infra-structure.
4. Limitation of the system impact due to the possibility of adapting the use of the two energy sources.
5. Combustion of kerosene fuel essentially not at cruising altitude, or only for short time windows, thus also avoiding climate-damaging greenhouse effects.

In general, the invention relates to engines for small and large transport aircraft (CS-23 and CS-25) with twin-engine drives (piston engines or turbo engines), which convert thermal energy into mechanical drive shaft power and drive a propulsor (propeller, paddle wheel, rotor) to generate thrust. The most economical implementation appears to be on primarily propeller-driven regional aircraft in the size class from approx. 30 passengers to 90 passengers. This corresponds to a propeller shaft power (sum of all propeller shafts - total power) of about 3,000 kW up to 8,000 kW.

The feasibility of this invention for certain aircraft classes is based on a technology outlook regarding performance and maturity that is achievable from today's perspective. Of course, the applicability of this system architecture extends to higher performance classes and aircraft sizes in the event of changes in the technology outlook and time of introduction.

Turbomachinery optimisation is usually done for the dominant phase of flight, primarily during the cruise phase, as this also represents the largest proportion and energy consumption over the mission. Equivalent, high operating efficiency is not possible across all flight phases. While maximum efficiency can be designed and achieved for the clearly dominant cruise flight for medium and long distances, the operating conditions for short and ultra-short distances are much less dominant and more varied. As a result, engines for regional and short-haul aircraft are operated much less at optimal efficiency over the entire mission and have worse specific fuel consumption per passenger relative to long-haul.

Among other things, the different drop in propulsive and thermal efficiency plays a role here, since, for example, a propeller aircraft flies at lower altitudes and experiences lower, altitude-dependent thrust losses in cruise flight than, comparatively, a long-haul aircraft with a turbofan engine. As a result, long-range engines run much more consistently at high power and are operated with good efficiency, both in climb and cruise, while regional aircraft have much wider power ranges, e.g. in take-off, climb and cruise.

### Summary of emission reduction:

- Based on a turboprop aircraft with approx. 40 to 90 passengers, about 90 % of the energy during a 1-hour mission can be generated emission-free via hydrogen. This means no CO₂ emissions during the cruise and no climate-damaging exhaust gas effects and condensation trails at cruising altitude (FL 250), which represent a significant proportion of aviation emissions.
- Furthermore, the combustion share of approx. 60% can be produced CO₂ neutrally when switching from conventional fuel to synthetic fuels. Thus, this aircraft and system architecture enables a 100% decarbonised and CO₂ neutral flight and about 40% emission-free flight with regard to CO₂, greenhouse gas and condensation trail effects at cruising altitude.

Further useful embodiments are disclosed in the dependent claims 2 to 6. A process to operate the aircraft efficiently is disclosed in claim 7.

The propulsion architecture described in this invention can also be sized and integrated as a retrofit variant for existing aircraft.

The invention is explained in the following based on preferred embodiments with reference to the accompanying drawings, in which:
- Fig. 1: shows a top-down view of a twin-engine commuter aircraft featuring a dualfuel propulsion system,
- Fig. 2: shows a schematic illustration of the hydrogen fuel system for the aircraft according to Fig. 1,
- Fig. 3a: shows a cut-off illustration of the aircraft fuselage according to Fig. 1 featuring a hydrogen fuel tank configuration with four hydrogen fuel tanks for extended range,
- Fig. 3b: shows a cut-off illustration of the aircraft fuselage according to Fig. 1 featuring a hydrogen fuel tank configuration with two hydrogen fuel tanks for high passenger capacity,
- Fig. 4a: shows a different tank scenario of the aircraft according to Fig. 1 with external hydrogen tanks attached outside at the empennage,
- Fig. 4b: shows a different tank scenario of the aircraft according to Fig. 1 with a pair of external hydrogen tanks, attached to the wings,
- Fig. 5a: shows a chart representing power over mission time and altitude over mission time of a typical 300 nm mission profile,
- Fig. 5b: shows full mission profile powered by hydrogen with smaller hydrogen capacity and SAF fuel for safety reserve and
- Fig. 5c: shows a profile for hydrogen cruise only (low hydrogen capacity) and SAF fuel for climb and safety reserve.

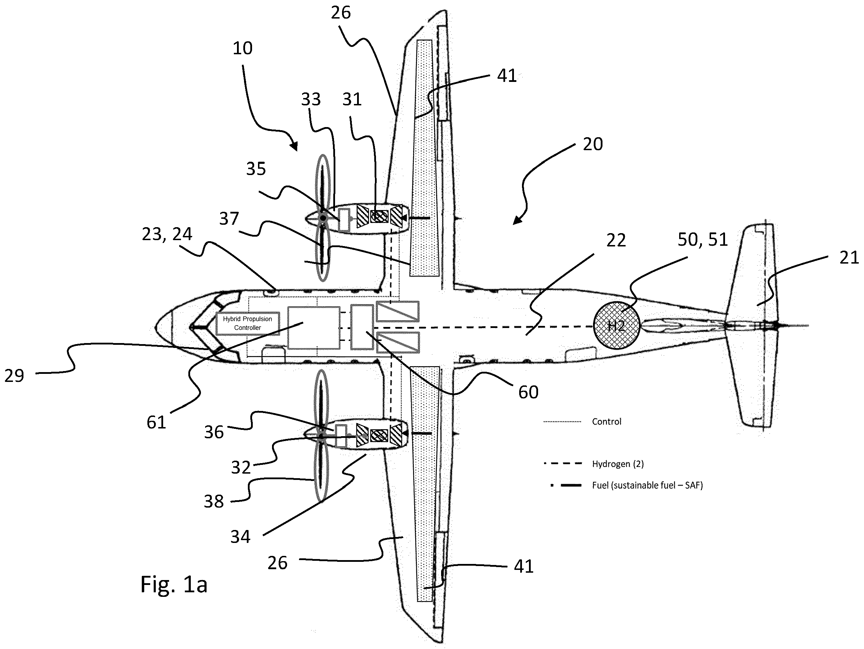

A typical installation configuration of a hybrid propulsion system 10 for a two-engine regional aircraft 20 is shown in the embodiment according to Fig. 1, using the legacy airplane D328-100 as an example for the airframe. The airplane 20 is designed as a conventional shoulder-wing aircraft 20 with a tail-sided T-tail empennage 21. The fuselage 22, is an assembly of cylindrical and conical sections, is designed with a pressurized cabin, a cockpit 23 in the front nose of the fuselage 22 and the passenger compartment 24. At the rear, the pressurized cabin is closed off pressure-tight by a pressure bulkhead 25. Further aft, the fuselage 22 tapers conically and carries the T-tail 21. In the conventional shoulder deck configuration, the wings 26 are attached to the fuselage's 22 upper side, tangent to the fuselage's upper side.

The two gas turbine engines 31 and 32 are housed in the engine nacelles 33 and 34 respectively, one each mounted on the left and right wing 26. The gas turbine engines 31 and 32 comprises a compressor driven by a turbine, a combustor that generates hot gases that drive the turbine and a set of fuel nozzles that supplies fuel to the combustor.

Corresponding gas turbines 31, 32 with integrated reduction gearboxes 35, 36 are available, for example, under the designation PW 119C from Pratt & Whitney Canada.

The multi-bladed and adjustable propellers 37, 38 are driven by the engines 31 and 32 via the reduction gearboxes 35, 36 also integrated in the engine nacelles 33 and 34. To prevent undesirable icing on the propeller blades, they can be heated electrically; the propeller blades receive the power for heating from a transmission unit 50.

Left and right wing tanks 41, 42 are integrated in the wings 26 to supply fuel to the two gas turbines 31, 32 via fuel lines and systems not shown further.

A key conceptual feature of the transport aircraft is its dual fuel propulsion system 10 wherein the aircraft 20 is capable of performing a flight mission comprising sections of at least take off, climb, cruise, decent, approach and landing during which first kerosene based jet fuel and a second liquid hydrogen is selectively useable. Thereby the gas turbine engines 31, 32 are capable of generating propulsive thrust using selectively the first kerosene based jet fuel and the second liquid hydrogen fuel. Therefore the aircraft provides two independent sets of fuel systems, including
a. a first fuel system feeding the first fuel - kerosene based jet fuel - from a first set of fuel storage tanks 41, 42 to the gas turbine engines 31, 32 and
b. a second fuel system feeding the second fuel - liquid hydrogen fuel - from a second set of fuel storage tanks 51 to the gas turbine engines 31, 32.

The aggregates consisting of controller 60 and transmission device 61 are arranged in a bow-side area of the fuselage 22 in front of the wing 26 and outside the pressurised cabin. The central controller 60 is provided to control the separate fuel systems. On the one hand, depending on the operating phase, the controller 60 controls the supply the engines with the first and second fuel. Typical parameters of the controller 60 to be controlled and monitored are the fuel flow and pressure, the speeds of the power and high-pressure shafts and turbine temperature of the gas turbines 41, 42.

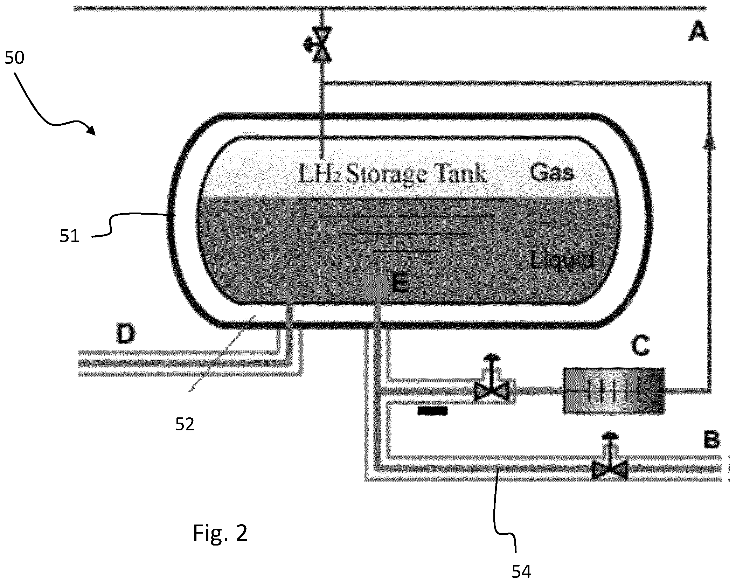

On the hydrogen fuel system 50 side the essential components in a hydrogen aircraft 20 are as illustrated in **Fig. 2****:**
- LH₂ or second fuel system for the distribution, vaporization, and feeding of LH₂ from the second set of tanks 51 to the turbines 31, 32: LH₂ requires cryogenic cooling down to 20 degrees Kelvin. These temperatures are handled by pipes, valves, and compressors; boil-off needs to be kept low; and leakage and embrittlement of material avoided.
- The gas turbines 31, 32 are having hydrogen direct-burning turbines (for H₂ combustion): In H₂ combustion airplanes LH₂ is directly burned in the turbine, much like kerosene, to create thrust. The use of cryogenic cooling of the fuel is expected to slightly increase efficiency (40 to 50 percent lower heating value [LHV]) compared to conventional engines.
- Set of hydrogen tanks 51: hydrogen can be stored as pressurized gas or in liquid form. While gaseous storage can be suitable for shorter flights and is commercially available, the embodiment focuses on liquid hydrogen (LH₂) storage tanks 51 as they require roughly half as much volume and consequently, they are significantly lighter than tanks for gaseous hydrogen. This is especially important for short-range segments, where the aircraft 20 will carry several hundred kg of hydrogen per flight. Compared to kerosene, LH₂ tanks are still about four times as big. Since LH₂ needs to remain cold and heat transfer must be minimized to avoid vaporization of hydrogen, spherical or cylindrical tanks 51 are provided to keep losses low. The second set of tanks 51 use lightweight material for double-insulated tank walls and insulation 52. The tank mass is expressed by the gravimetric index and is defined as the weight of the LH₂ fuel mass in relation to the full weight of the LH₂ tank filled with maximum LH₂ fuel. The latest concepts for commuter aircraft 20 have a gravimetric index of up to 35 percent.

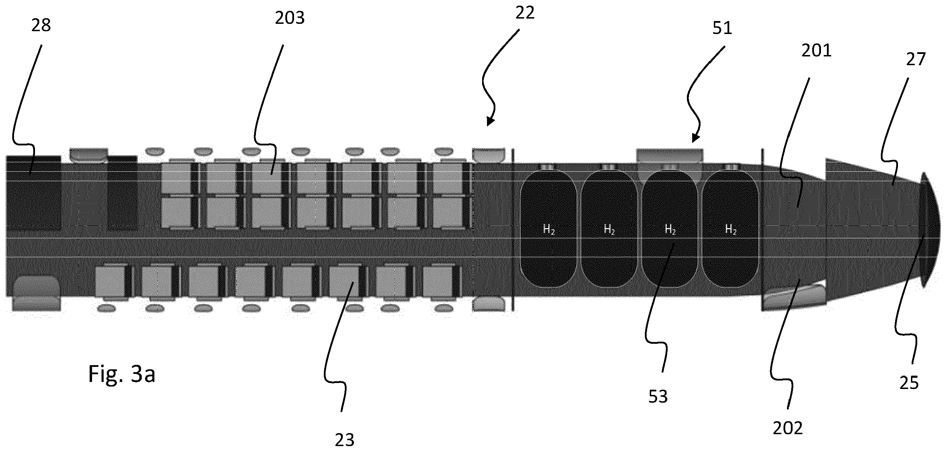

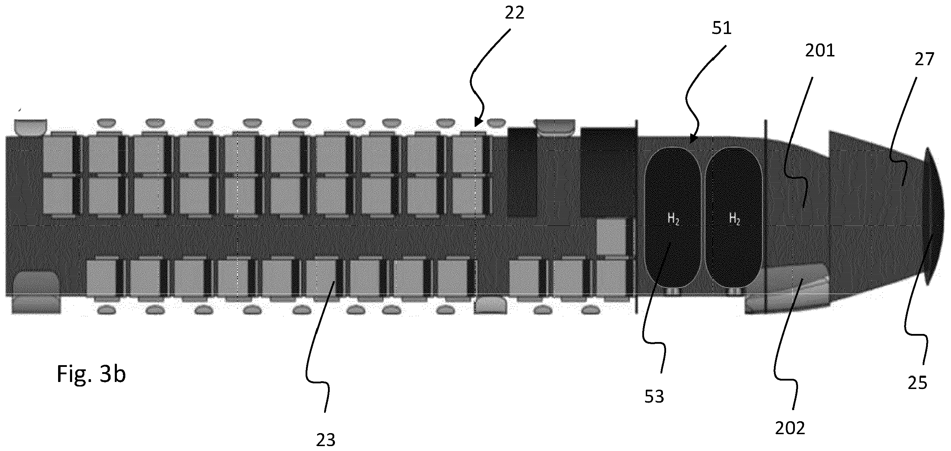

To efficiently integrate the tanks into the given aircraft's fuselage 22, the airframe does not need to be extended, when a fraction of the cargo or passenger space is converted in a fuselage section hosting the set of hydrogen tanks 51 called second set of fuel tanks as further illustrated in **Fig. 1****,** **Fig. 3a** and **Fig. 3b****.**

Preferred configurations are shown in **Fig. 3a** and **Fig. 3b** with examples for different tank scenarios inside the fuselage 22. The seat capacity of the first configuration is limited to approx. 22 passenger seats 203 are installed in the forward facing cabin section 23 of the fuselage 22. Adjacent to the cabin section 23 is the galley 28 and in the nose section the cockpit 29. The first configuration **(ref.** **Fig. 3a****)** is dedicated for a long cruise segment featuring four tank packages 53 arranged in a line one behind each other to maximise the available space. Hydrogen tanks 51 are included in unmodified fuselage 22 with less space for passenger seats 203. The second configuration according to **Fig. 3b** is dedicated to a high passenger capacity profile featuring two tank packages 53 arranged in a line one behind each other.

Each tank package 53 includes two cylindrical isolated low-pressure tanks. The second fuel system 50 includes furthermore insulated fuel pipes 54 and a dedicated insulated LH₂ filling line to each feeder tank 51.

Next to the tail empennage 21 there is the freight or baggage compartment 201 located with an outward facing door 202 to handle freight and baggage. Between the tail cone 27 which carries the tail empennage 21 and the freight / baggage compartment 201 the pressure bulkhead 25 is located. Hence the cabin 23, the section for the second fuel tanks and the freight compartment 201 within the fuselage 22 are part of the pressurized fuselage 22.

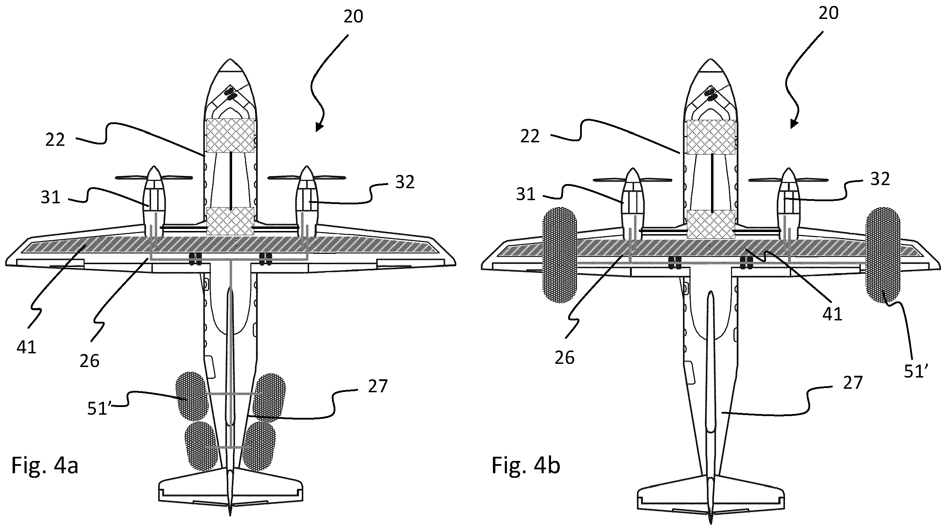

**Fig 4a** and **Fig. 4b** illustrate different tank scenarios for a flexible aircraft design. In the configuration of Fig. 4a the external hydrogen tanks 51' for the hydrogen are located outside of the fuselage 22 attached on the outer tail cone section 27 of the fuselage 22. The configuration of Fig. 4b features a pair of external hydrogen tanks 51' which are attached to the wings 26.

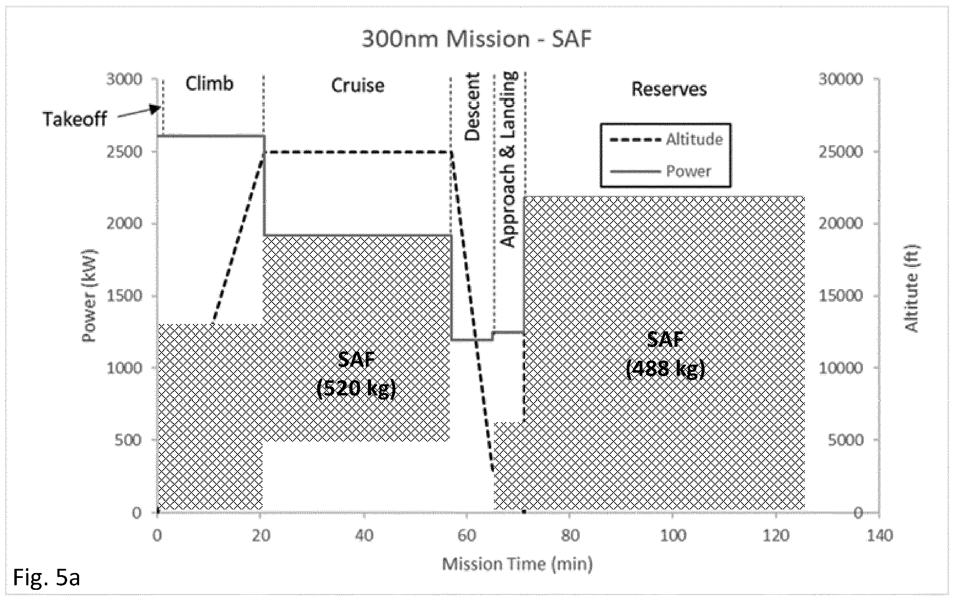

Diagramm of **Fig. 5a** is a typical 300 nm mission profile example of a conventional aircraft configuration which operates with SAF jet fuel only. For the sections of the complete 300 NM mission profile 520 kg of SAF fuel is required and hosted in the wing tanks 41. For the required trip reserve 488 kg of SAF fuel is calculated which is hosted in the wing tanks as well.

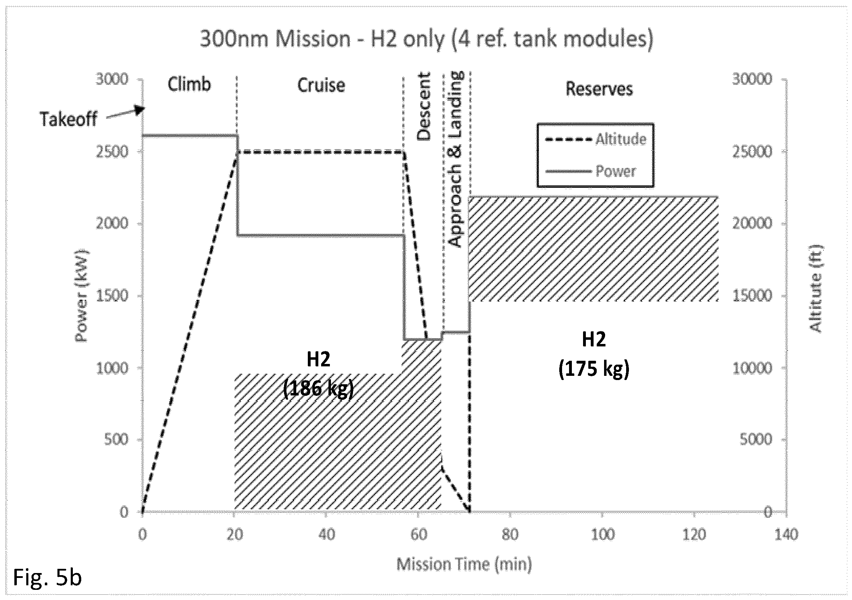

The diagram in **Fig. 5b** again represents the a typical 300 nm mission profile with a configuration for hydrogen fuel only. To host the total amount of 361 kg of hydrogen fuel in total four hydrogen fuel tanks are hosted in the tail section of the fuselage 22 as it is illustrated in the embodiment of **Fig. 4a****.** This configuration would be at the cost of the available seat capacity (approximately 22 seats) for the mission.

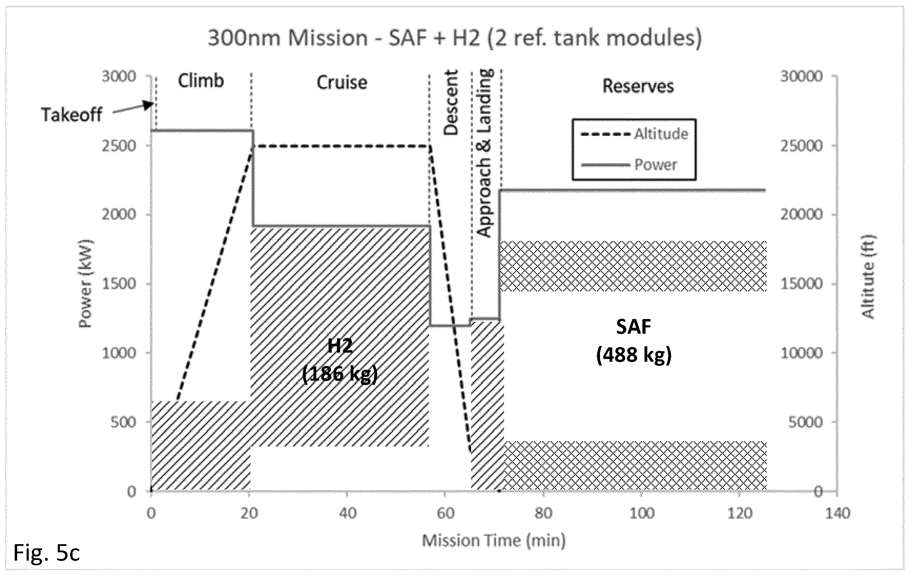

The diagram in **Fig. 5c** shows the a typical 300 nm mission profile for an aircraft configured for SAF as first fuel and H₂ fuel hosted in three tank modules. The fuel and weight calculation is as follows:
Option Hybrid Block Energy - 25% SAF / 75% H₂ fuel loads, fuel weights are
- SAF: 488 kg
- H₂: 186 kg
- H₂ Tank: 792 kg
- Approx. 29 passengers
- Reserve SAF: 488 kg

The diagram and the table demonstrates the required tank volume for hydrogen is thus minimised in order to maximise the possibilities for integration into the aircraft. The diagram also shows the power requirement in kW and flight altitude in ft over the time of a typical 300 NM flight mission. The most important phases of the typical flight mission are explained below:
Take-off:
   Take-off is the phase of flight in which the aircraft 20 undergoes a transition from moving on the ground (taxiing) to flying in the air, usually starting on a runway. Usually the engines are operated at full power during take-off.
Climb:
   After take-off, the aircraft climbs to a certain altitude (in this case 25,000 ft) before flying safely and economically to its destination at this altitude.
Cruise flight:
   Cruise flight is the portion of air travel where flying is most fuel efficient. It takes place between ascent and descent phases and is usually the largest part of a journey. Technically, cruise flight is conducted at a constant airspeed and altitude. Cruise flight ends when the aircraft approaches the destination, where the descent phase begins in preparation for landing. For most commercial passenger aircraft, the cruise phase consumes most of the fuel.
Descent:
   The descent during a flight is the section in which an aircraft loses altitude. The descent is an essential part of the landing approach. Other partial descents may be to avoid traffic, to avoid poor flying conditions (turbulence or bad weather), clouds (especially under visual flight rules), to enter warmer air (if there is a risk of icing) or to take advantage of the wind direction of another altitude. Normal descents take place at a constant airspeed and angle of descent. The pilot controls the angle of descent by varying the engine power and angle of attack (lowering the nose) to keep the airspeed within the specified range. At the beginning and during the descent phase, the engines will be operated at low power.
Approach & Landing:
   The approach and landing is the final part of a flight where the aircraft returns to the ground. For landing, airspeed and rate of descent are reduced enough to maintain a predetermined glide path (3 degree final approach to most airports) to the touchdown point on the runway. Speed reduction is achieved by reducing thrust and/or creating greater drag using flaps, landing gear or airbrakes. As the aircraft approaches the ground, the pilot performs an intercept (flare) to initiate a soft landing. Landing and approach procedures are mostly performed using an instrument landing system (ILS).

Line A (dashed): Power requirement of the propulsion system 10 over the mission. The power requirement is highest during take-off and reduces over the subsequent flight phases. The power demand for the flight phase take-off, climb, cruise, approach and landing is completely served by the gas turbines 41, 42 fuelled from the secondary hydrogen fuel tanks. The dotted area below line A represents the consumption of fuel by the gas turbines 41, 42 and the dashed area represents the required reserve fuel which is for flights according instrument flight rules (IFR) equivalent 45 mins.

Line B (solid) describes the flight altitude in ft over the time of the mission. The flight altitude is highest during the cruise flight and is about 25,000 ft.

### Summary of invention benefits:

▪ Increasing the payload efficiency of a hydrogen powered aircraft by eliminate regulatory reserve fuel mass from hydrogen fuel mass (see picture block fuel diagrams). → More payload and available space for required block energy / fuel,
▪ Operational capability within hydrogen infrastructure and also in conventional jet-A1 / SAF infrastructure in case of hydrogen infrastructure unavailability. → Operational flexibility to operate between hydrogen and conventional infrastructures and different fuels capability (hydrogen, Jet-A1, sustainable aviation fuel (SAF), SAF-PtL),

Increased aircraft safety concerning hydrogen system failure or in operability.

### List of References

- 10: Hybrid propulsion system
- 20: Aircraft
- 21: T-type empennage
- 22: Fuselage
- 23: Forward facing cabin section
- 24: Passenger compartment
- 25: Pressure bulkhead
- 26: Wings, left and right
- 27: Tail cone
- 28: Galley
- 29: Cockpit
- 201: Freight or baggage compartment
- 202: Door
- 203: Passenger seats
- 31, 32: Gas turbine engines
- 33, 34: Engine nacelles, left and right
- 35, 36: Gearboxes, left and right
- 37, 38: Propeller, left and right
- 41: Wing tanks
- 50: Hydrogen fuel system
- 51: Set of hydrogen tanks
- 52: Tank walls and insulation
- 53: Hydrogen tank package
- 54: Fuel pipes
- 55: First kerosene fuel system
- 60: Controller
- 61: Transmission device

- SP: Center of gravity

## Claims

1. Transport aircraft comprising a fuselage (22) hosting passengers and / or freight in the cabin, wings (26) attached to the fuselage (22) to generate lift and a dual fuel propulsion system, wherein the aircraft (20) is capable of performing a flight mission comprising flight sections of at least take-off, climb, cruise, decent, approach and landing during which the first or the second fuel is selectively useable and the aircraft (20) is comprising
• at least one internal combustion engine (31, 32) capable of generating propulsive thrust using selectively a first kerosene based jet fuel and a second hydrogen fuel,
• two independent sets of fuel systems (50, 55), including a first fuel system (55) feeding the jet fuel from a first set of fuel storage tanks (41) to the internal combustion engine (31, 32) and a second fuel system (50) feeding the hydrogen fuel from a second set of fuel storage tanks (51) to the internal combustion engine (31, 32),
• at least two separate sets of fuel storage tanks (41, 51) with a first set of fuel storage tanks (41) storing the jet fuel and a second set of fuel storage tanks (51) storing the hydrogen fuel, wherein both sets of fuel storage tanks (41, 51) host the required fuel for the flight mission plus reserve fuel, wherein
• the wings (26) host an internal first set of fuel storage tanks (41) and
• the second set of fuel storage tanks (51) is hosted in the fuselage cabin and / or attached as external fuel storage tanks (51') on the wings and / or on the fuselage
whereas the first set of fuel storage tanks (41) host at least sufficient fuel for the flight mission required reserve and the second set of fuel storage tank (51, 51') host at least sufficient fuel for the flight sections.

2. Aircraft according to claim 1, **characterised in that** the fuselage has pressurised cabin sections which are configured to swap cabin seats (203) in return for fuel storage tanks (51, 53) or fuel storage tanks (51, 53) for cabin seats (203).

3. Aircraft according to one of the proceeding claims, **characterised in that** the set of hydrogen tanks (51) are comprising tanks with spherical or cylindrical shape.

4. Aircraft according to one of the proceeding claims, **characterised in that** the fuselage (22) comprises a forward cabin section (23) to host passengers and / or freight and a cabin section in the tail section of the fuselage (22) hosting the second set of fuel storage tanks (51).

5. Aircraft according to one of the proceeding claims, **characterised in that** the aircraft comprises at least one controller (60) connected with the two independent sets of fuel systems (50, 55) to selectively feed the jet fuel and the hydrogen fuel to the internal combustion engine (31, 32) during individual sections of the flight mission.

6. Aircraft according to one of the proceeding claims, **characterised in that** the aircraft cockpit comprises a software supported system to choose the type of fuel according to the lowest emission impact of the aircraft depending on route and flight level.

7. Process to operate an aircraft according to one of the proceeding claims, **characterised in that** the type of fuel is chosen according to the lowest emission impact of the aircraft depending on route and flight level.
